# EUROPEAN PATENT APPLICATION

(11) **EP 2 660 912 A1**
(43) Date of publication of application: **06.11.2013**
(21) Application number: 11853044.3
(22) Date of filing: 27.12.2011
(51) Int. Cl.: H01M 8/04

(54) **FUEL CELL SYSTEM**

(30) Priority: 28.12.2010 JP 2010292694
(71) Applicant: JX Nippon Oil & Energy Corporation, Chiyoda-ku Tokyo 100-8162 (JP)
(72) Inventor: MIZUNO Tamaki, Tokyo 100-8162 (JP); SATO Yasushi, Tokyo 100-8162 (JP)
(74) Representative: Grünecker, Kinkeldey, Stockmair & Schwanhäusser
(86) International application number: PCT/JP2011/080266
(87) International publication number: WO 2012/091035

(57) **Abstract**

In the fuel cell system (1), a change in a voltage from a cell stack (5) in relation to a fuel utilization rate is acquired and deterioration of the cell stack (5) is detected by comparing a value of the voltage with a reference value. Moreover, when it is determined that the cell stack (5) has deteriorated, the rated power of the system is decreased so that the fuel cell system (1) operates according to the deterioration state of the cell stack (5).

## Description

### Technical Field

The present invention relates to a fuel cell system.

### Background Art

Conventionally, a fuel cell system that includes a hydrogen generating unit that generates hydrogen-containing gas using hydrogen-containing fuel and a cell stack that performs power generation using the hydrogen-containing gas is known. In such a fuel cell system, there is a problem in that, when deterioration of the cell stack progresses so that it is difficult to maintain its rated power, an over-voltage increases and the temperature of the cell stack increases.

To solve such a problem, a fuel cell system disclosed in Patent Literature 1, for example, uses current-to-fuel utilization rate data in a temperature rising period where power increases from 0 to reach its rated power and a temperature falling period where power decreases from its rated power to reach 0. Moreover, the fuel cell system prevents deterioration or the like of the cell stack by controlling the supply amount of fuel gas in the respective operation periods based on the data.

### Citation List

### Patent Literature

Patent Literature 1: Japanese Patent Application Laid-open No. 2006-59550

However, according to the method as disclosed in the conventional technique, there is a possibility that the temperature of the cell stack repeatedly increases and decreases, and as a result, the deterioration of the cell stack is accelerated. Moreover, it is inevitable that the cell stack deteriorates with the operation of the fuel cell system. Thus, rather than the technique of suppressing deterioration of the cell stack, a technique of operating the fuel cell system without any problem according to a deterioration state of the cell stack even when the cell stack deteriorates is required.

### Summary of Invention

### Technical Problem

The present invention has been made to solve the above-described problems, and an object of the present invention is to provide a fuel cell system capable of operating according to a deterioration state of a cell stack.

### Solution to Problem

According to an aspect of the present invention, there is provided a fuel cell system including: a hydrogen generating unit that generates hydrogen-containing gas using hydrogen-containing fuel; a cell stack that performs power generation using the hydrogen-containing gas; a voltage detecting unit that detects a voltage output from the cell stack; an operation state determining unit that determines whether the fuel cell system is in a rated operation state; a fuel utilization rate changing unit that changes a fuel utilization rate of the fuel cell system when the operation state determining unit determines that the fuel cell system is in the rated operation state; a comparing unit that acquires respective voltage values for respective fuel utilization rates changed by the fuel utilization rate changing unit and compares the respective voltage values with a reference value; and a rated power control unit that decreases a rated power of the fuel cell system at a predetermined ratio when the comparing unit determines that a decrease in the respective voltage values in relation to the reference value exceeds a threshold value.

This fuel cell system acquires a change in the voltage from the cell stack in relation to a fuel utilization rate and detects deterioration of the cell stack by comparing a value of the voltage with a reference value. Moreover, when it is determined that the cell stack has deteriorated, the rated power of the system is decreased so that the fuel cell system operates according to the deterioration state of the cell stack.

### Advantageous Effects of Invention

According to this fuel cell system, it is possible to perform an operation according to a deterioration state of the cell stack.

### Brief Description of Drawings

Fig. 1 is a diagram showing an embodiment of a fuel cell system.
Fig. 2 is a diagram showing functional constituent components of a control unit.
Fig. 3 is a diagram showing how a voltage changes with a fuel utilization rate.
Fig. 4 is a flowchart showing an example of a diagnostic process of a control unit.
Fig. 5 is a flowchart showing an example of determination of diagnosis starting conditions.

### Description of Embodiments

Hereinafter, a preferred embodiment of a fuel cell system according to the present invention will be described in detail with reference to the drawings. In the drawings, the same or corresponding portions will be denoted by the same reference numerals and redundant description thereof will not be provided.

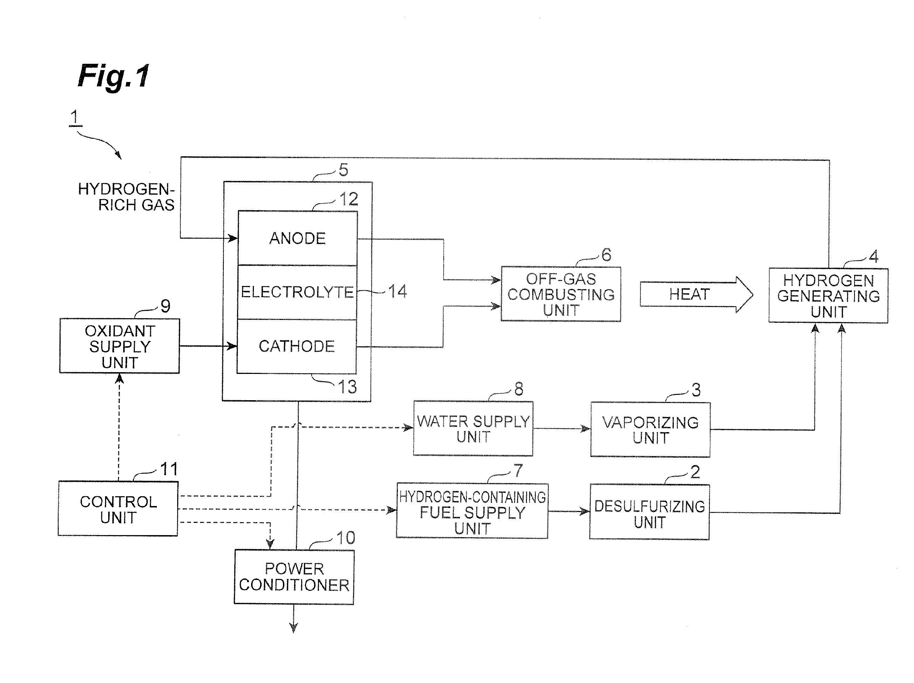

As shown in Fig. 1, a fuel cell system 1 includes a desulfurizing unit 2, a vaporizing unit 3, a hydrogen generating unit 4, a cell stack 5, an off-gas combusting unit 6, a hydrogen-containing fuel supply unit 7, a water supply unit 8, an oxidant supply unit 9, a power conditioner 10, and a control unit 11. In the fuel cell system 1, the cell stack 5 performs power generation using hydrogen-containing fuel and oxidant. The type of the cell stack 5 in the fuel cell system 1 is not particularly limited, and for example, a polymer electrolyte fuel cell (PEFC), a solid oxide fuel cell (SOFC), a phosphoric acid fuel cell (PAFC), a molten carbonate fuel cell (MCFC), and other types of fuel cells can be used. The constituent components shown in Fig. 1 may be appropriately omitted depending on the type of the cell stack 5, the type of hydrogen-containing fuel, a reforming method, and the like.

As the hydrogen-containing fuel, hydrocarbon-based fuel is used, for example. As the hydrocarbon-based fuel, compounds containing carbon and hydrogen (the compounds may contain other elements such as oxygen) in their molecules and mixtures thereof are used. Examples of the hydrocarbon-based fuel include hydrocarbons, alcohols, ethers, and biofuel, and hydrocarbon-based fuels that originate from existing fossil fuels such as petroleum or coal, that originate from synthetic fuels such as synthetic gas, and that originate from biomass can be appropriately used. Specifically, examples of hydrocarbons include methane, ethane, propane, butane, natural gas, liquefied petroleum gas (LPG), city gas, town gas, gasoline, naphtha, kerosene, and gas oil. Examples of alcohols include methanol and ethanol. Examples of ethers include dimethyl ether. Examples of biofuel include biogas, bioethanol, biodiesel, and bio jet.

As the oxidant, air, pure oxygen gas (may contain impurities that are rarely removed by a general removal method), and oxygen-enriched air are used.

The desulfurizing unit 2 desulfurizes the hydrogen-containing fuel supplied to the hydrogen generating unit 4. The desulfurizing unit 2 has a desulfurizing catalyst for removing sulfurated compounds contained in the hydrogen-containing fuel. As a desulfurization method of the desulfurizing unit 2, an adsorptive desulfurization method of adsorbing and removing sulfurated compounds and a hydrodesulfurization method of allowing sulfurated compounds to react with hydrogen to remove the sulfurated compounds are used, for example. The desulfurizing unit 2 supplies the desulfurized hydrogen-containing fuel to the hydrogen generating unit 4.

The vaporizing unit 3 generates steam supplied to the hydrogen generating unit 4 by heating and vaporizing water. When water is heated by the vaporizing unit 3, heat generated within the fuel cell system 1 such as heat of the hydrogen generating unit 4, heat of the off-gas combusting unit 6, or heat recovered from exhaust gas may be used. Moreover, water may be heated using additional heat sources such as a heater or a burner. Although only the heat supplied from the off-gas combusting unit 6 to the hydrogen generating unit 4 is illustrated as an example in Fig. 1, the present invention is not limited to this. The vaporizing unit 3 supplies the generated steam to the hydrogen generating unit 4.

The hydrogen generating unit 4 generates hydrogen-rich gas using the hydrogen-containing fuel from the desulfurizing unit 2. The hydrogen generating unit 4 has a reformer that reforms the hydrogen-containing fuel using a reforming catalyst. A reforming method used in the hydrogen generating unit 4 is not particularly limited, and for example, steam reforming, partial oxidation reforming, autothermal reforming, and other reforming methods can be used. The hydrogen generating unit 4 may include a configuration for adjusting properties in addition to the reformer that reforms the hydrogen-containing fuel using the reforming catalyst depending on the properties of the hydrogen-rich gas required for the cell stack 5. For example, when the type of the cell stack 5 is a polymer electrolyte fuel cell (PEFC) or a phosphoric acid fuel cell (PAFC), the hydrogen generating unit 4 includes a configuration (for example, a shift reactor and a selective oxidation reactor) for removing carbon monoxides in the hydrogen-rich gas. The hydrogen generating unit 4 supplies the hydrogen-rich gas to an anode 12 of the cell stack 5.

The cell stack 5 performs power generation using the hydrogen-rich gas from the hydrogen generating unit 4 and the oxidant from the oxidant supply unit 9. The cell stack 5 includes the anode 12 to which the hydrogen-rich gas is supplied, a cathode 13 to which the oxidant is supplied, and an electrolyte 14 disposed between the anode 12 and the cathode 13. The cell stack 5 supplies electric power to the outside via the power conditioner 10. The cell stack 5 supplies hydrogen-rich gas and oxidant that were not used for power generation to the off-gas combusting unit 6 as off-gas. A combusting unit (for example, a combustor or the like that heats the reformer) included in the hydrogen generating unit 4 may be used as the off-gas combusting unit 6.

The off-gas combusting unit 6 combusts the off-gas supplied from the cell stack 5. The heat generated by the off-gas combusting unit 6 is supplied to the hydrogen generating unit 4 and is used for generation of the hydrogen-rich gas in the hydrogen generating unit 4.

The hydrogen-containing fuel supply unit 7 supplies the hydrogen-containing fuel to the desulfurizing unit 2. The water supply unit 8 supplies water to the vaporizing unit 3. The oxidant supply unit 9 supplies the oxidant to the cathode 13 of the cell stack 5. The hydrogen-containing fuel supply unit 7, the water supply unit 8, and the oxidant supply unit 9 are configured as a pump, for example, and are driven based on a control signal from the control unit 11.

The power conditioner 10 adjusts the electric power from the cell stack 5 according to a power consumption state on the outside. The power conditioner 10 performs a process of converting a voltage and a process of converting a DC power into an AC power, for example.

The control unit 11 performs a process of controlling the entire fuel cell system 1. The control unit 11 is configured as a device that includes a central processing unit (CPU), a read only memory (ROM), a random access memory (RAM), and an input/output interface. The control unit 11 is electrically connected to the hydrogen-containing fuel supply unit 7, the water supply unit 8, the oxidant supply unit 9, the power conditioner 10, and other sensors and auxiliary devices (not shown). The control unit 11 acquires various signals generated within the fuel cell system 1 and outputs a control signal to respective devices in the fuel cell system 1.

Next, the control executed by the control unit 11 will be described in further detail.

The control unit 11 is a portion that outputs a control signal to respective devices in the fuel cell system 1, and in addition to this, executes a diagnostic process of diagnosing deterioration of the cell stack 5.

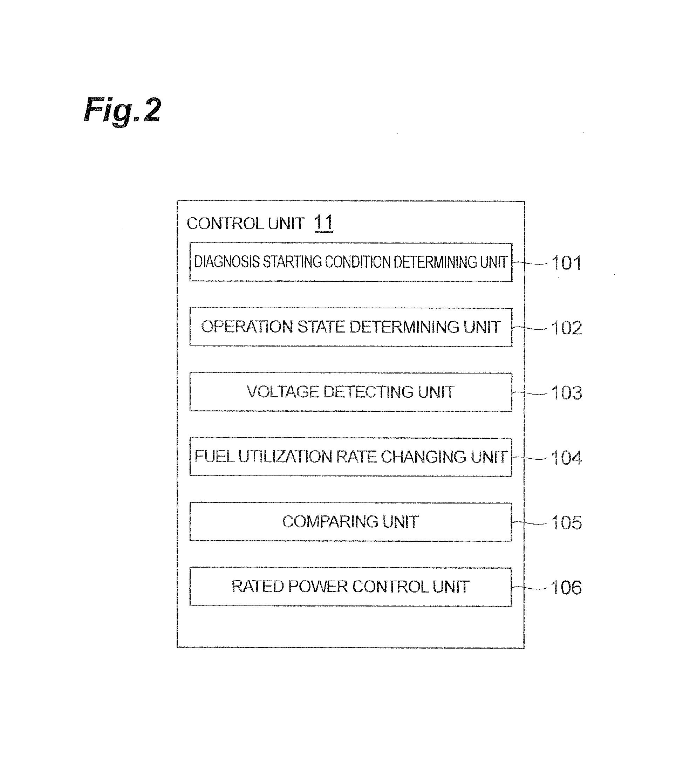

For this diagnostic process, as shown in Fig. 2, the control unit 11 includes, as its functional constituent components, a diagnosis starting condition determining unit 101, an operation state determining unit 102, a voltage detecting unit 103, a fuel utilization rate changing unit 104, a comparing unit 105, and a rated power control unit 106.

The diagnosis starting condition determining unit 101 is a portion that determines whether or not to execute a diagnostic process. Various conditions can be used as the diagnosis starting conditions, and examples thereof include a condition that a predetermined period has elapsed after the fuel cell system 1 starts power generation and a condition that a residual amount in a hot water tank (not shown) connected to the fuel cell system 1 is small and there is a demand for hot water (the fuel cell system 1 is recovering heat). The predetermined period after power generation starts is set to 1000 hours, for example.

The operation state determining unit 102 is a portion that determines whether the fuel cell system 1 is in a rated operation state. The rated operation state is an operation state where the electric power generated by the cell stack 5 amounts to the maximum power in specification and the voltage and current are stable. The operation state determining unit 102 determines that the fuel cell system 1 is in the rated operation state when a moving average of the voltage output from the cell stack 5 is equal to or smaller than a threshold value for a predetermined period (for example, 15 minutes), for example.

The voltage detecting unit 103 is a portion that detects a voltage output from the cell stack 5 to the power conditioner 10. The voltage detecting unit 103 constantly detects the voltage output from the cell stack 5 to the power conditioner 10 during the period when the fuel cell system 1 is generating power.

The fuel utilization rate changing unit 104 is a portion that changes a fuel utilization rate of the fuel cell system 1. The fuel utilization rate is the ratio of the flow rate of fuel used in the power generation reaction in the cell stack 5 to the flow rate of fuel supplied from the hydrogen-containing fuel supply unit 7. The fuel utilization rate changing unit 104 controls the hydrogen-containing fuel supply unit 7 to change the fuel utilization rate of the fuel cell system 1 when the operation state determining unit 102 determines that the fuel cell system 1 is in the rated operation state.

The comparing unit 105 acquires the respective voltage values for the respective fuel utilization rates changed by the fuel utilization rate changing unit 104 from the voltage detecting unit 103 and compares the respective voltage values with a reference value. The reference value may be a predetermined voltage value stored in the comparing unit 105 and may be a voltage value acquired during execution of a previous diagnostic process.

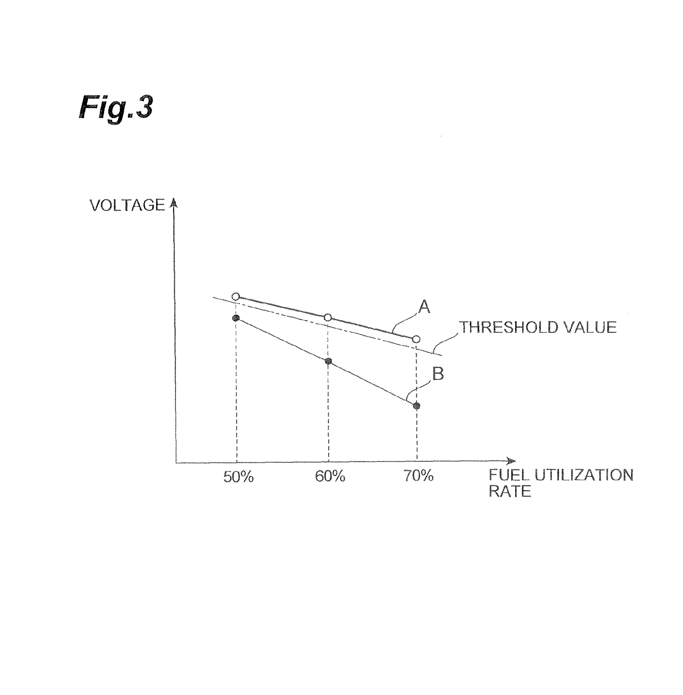

The example shown in Fig. 3 shows a voltage value when the fuel utilization rate is changed at a step of 10% in the range of 50% to 70%, for example. The comparing unit 105 determines that the cell stack 5 has not deteriorated when a decrease in the respective voltage values in relation to the respective fuel utilization rates is smaller than a threshold value (see graph A). On the other hand, the comparing unit 105 determines that the cell stack 5 has deteriorated when a decrease in the respective voltage values in relation to the respective fuel utilization rates exceeds the threshold value (see graph B).

The rated power control unit 106 is a portion that controls the rated power of the fuel cell system 1. The rated power control unit 106 decreases the rate power of the fuel cell system 1 at a predetermined ratio when the comparing unit 105 determines that the decrease in the respective values in relation to the respective fuel utilization rates exceeds the threshold value.

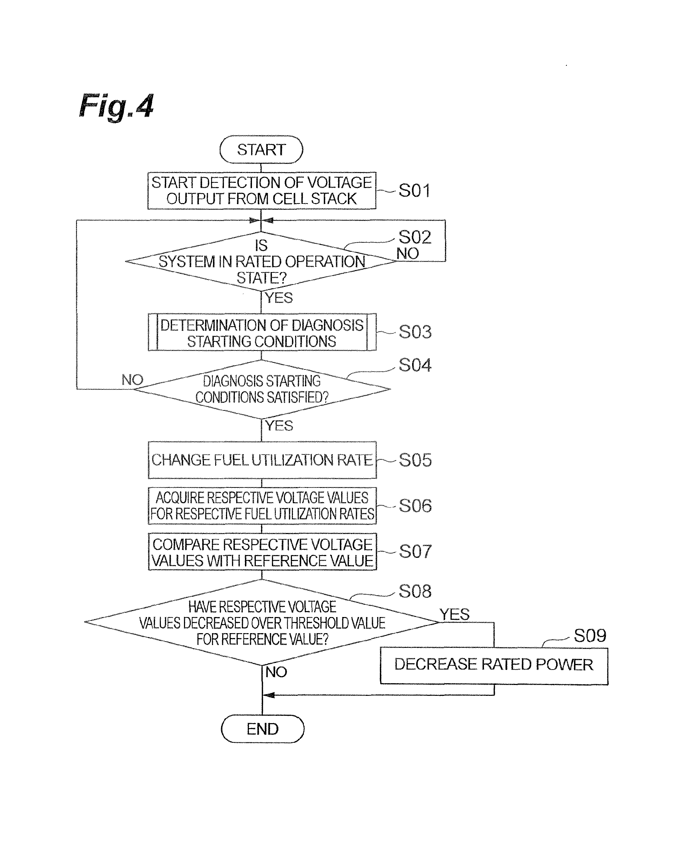

Next, the operation of the control unit 11 will be described. Fig. 4 is a flowchart showing an example of the diagnostic process of the control unit.

First, the fuel cell system 1 starts power generation, detection of the voltage output from the cell stack 5 starts (step S01). Subsequently, it is determined whether the fuel cell system 1 is in the rated operation state based on a variation of the moving average of the voltage output from the cell stack 5 (step S02). When it is determined in step S02 that the fuel cell system 1 is in the rated operation state, determination of the diagnosis starting conditions is performed (steps S03 and S04).

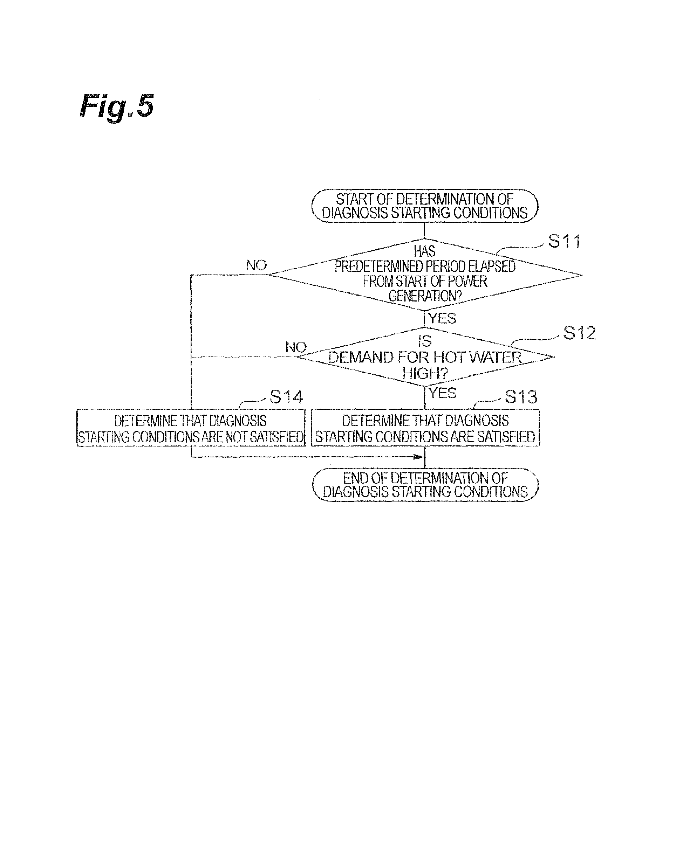

In determination of the diagnosis starting conditions, as shown in Fig. 5, for example, first, it is determined whether a predetermined period has elapsed from the power generation starts (step S11). Subsequently, it is determined whether there is a high demand for hot water (step S12). When both conditions of steps S11 and S12 are satisfied, it is determined that the diagnosis starting conditions are satisfied (step S13). Moreover, when any one of the conditions of steps S11 and S12 is not satisfied, it is determined that the diagnosis starting conditions are not satisfied (step S 14). When it is determined that the diagnosis starting conditions are not satisfied, the processes of steps S02 to S04 are repeatedly performed.

When it is determined that the diagnosis starting conditions are satisfied, as shown in Fig. 4, the fuel utilization rate changing unit 104 changes the fuel utilization rate (step S05). Subsequently, the respective voltage values of the cell stack 5 for the respective fuel utilization rates are acquired (step S06). After the respective voltage values are acquired, the voltage values are compared with a reference value (step S07), and it is determined whether a decrease in the respective voltage values exceeds a threshold value (step S08).

When it is determined in step S08 that the decrease in the respective voltage values is smaller than the threshold value, it is determined that the cell stack 5 has not deteriorated, and the diagnostic process ends. On the other hand, when the decrease in the respective voltage values exceeds the threshold value, it is determined that the cell stack 5 has deteriorated, and the rated power of the fuel cell system 1 is decreased at a predetermined ratio (step S09).

As described above, the fuel cell system 1 acquires a variation of a voltage from the cell stack 5 in relation to a variation of the fuel utilization rate and detects deterioration of the cell stack 5 by comparing the voltage value and the reference value. Moreover, when it is determined that the cell stack 5 has deteriorated, the rated power of the system is decreased so that the fuel cell system 1 operates according to the deterioration state of the cell stack 5.

Moreover, in the fuel cell system 1, rather than directly measuring the state of the cell stack 5, the deterioration of the cell stack 5 is determined based on a change in the voltage of the cell stack 5 in the rated operation state where the sweeping current is constant. In this manner, it is possible to simplify the configuration necessary for determining the deterioration of the cell stack 5.

### Reference Signs List

- 1:: fuel cell system
- 4:: hydrogen generating unit
- 5:: cell stack
- 6:: off-gas combusting unit
- 102:: operation state determining unit
- 103:: voltage detecting unit
- 104:: fuel utilization rate changing unit
- 105:: comparing unit
- 106:: rated power control unit

## Claims

1. A fuel cell system comprising:
a hydrogen generating unit that generates hydrogen-containing gas using hydrogen-containing fuel;
a cell stack that performs power generation using the hydrogen-containing gas;
a voltage detecting unit that detects a voltage output from the cell stack;
an operation state determining unit that determines whether the fuel cell system is in a rated operation state;
a fuel utilization rate changing unit that changes a fuel utilization rate of the fuel cell system when the operation state determining unit determines that the fuel cell system is in the rated operation state;
a comparing unit that acquires respective voltage values for respective fuel utilization rates changed by the fuel utilization rate changing unit and compares the respective voltage values with a reference value; and
a rated power control unit that decreases a rated power of the fuel cell system at a predetermined ratio when the comparing unit determines that a decrease in the respective voltage values in relation to the reference value exceeds a threshold value.
